# EUROPEAN PATENT SPECIFICATION

(11) **EP 2 699 497 B1**
(45) Date of publication and mention of the grant of the patent: **17.08.2016**
(21) Application number: 12715993.7
(22) Date of filing: 19.04.2012
(51) Int. Cl.: B65G 1/137

(54) **STORAGE SYSTEM FOR HANDLING PACKAGES**
LAGERSYSTEM ZUM HANDHABEN VON VERPACKUNGEN
SYSTEME DE STOCKAGE POUR LE MANIEMENT D'EMBALLAGES

(30) Priority: 19.04.2011 DK 201170190
(43) Date of publication of application: 26.02.2014
(73) Proprietor: PROCES-DATA A/S, 8600 Silkeborg (DK)
(72) Inventor: THYRRING, Rasmus, 8600 Silkeborg (DK); CRAMER NIELSEN, Christian, 8600 Silkeborg (DK)
(74) Representative: Grey, Ian Michael
(86) International application number: PCT/EP2012/057185
(87) International publication number: WO 2012/143457

(56) References cited:
- EP-A1- 1 522 507
- EP-B1- 2 108 601
- WO-A1-2009/124878
- DE-A1- 19 651 464
- DE-A1- 19 828 659
- DE-U1-202008 006 941
- US-A- 5 805 455

## Description

The invention relates to a storage system for handling outers, which system comprises a number of compartments for accommodating one or more outers.

In the field of managing cartons of cigarettes in a retail environment or similar places, where cigarettes or other tobacco industry products may be purchased, it is difficult to have a clear overview of different products and to keep track of the expiry date of larger packs containing a number of smaller packs of i.e.cigarettes. It is also a problem that packages dissapear during handling, perhaps as a result of unauthorised access to such packages.

A carton of cigarettes contains a plurality of packs of cigarettes and typically contains ten packs of cigarettes each pack containing twenty cigarettes, for example. As a result of a carton containing several packages the carton will represent a certain value and thus it is the subject of increased attention and monitoring. Since in the future only few individual packages will be packed in larger packages made of carton or cardboard, the more common expression for such packages is "outer" or "outers", which expressions primarily will be used throughout the description.

Several systems for keeping the individual outers under surveillance are available, but are not able to also monitor which outers should be used first.

One way to deal with the problem could be that outers are kept in a locked cabinet, where a retail worker can unlock the cabinet when it is necessary to obtain more outers with cigarette packages to restock a sales display, a vending machine or the like.

When the cabinet is unlocked, the retail worker will have to find an outer corresponding to the specified product.

Such a cabinet may be placed in a location that is distant from the sales area.

When using such a solution it may happen occasionally that the cabinet is not locked either by mistake or because the retail worker is in a hurry, because it takes time to retrieve the outers if several products are required.

Also, if the retail worker, each time one or more outers is needed, has to contact a further retail worker, such as a supervisor, to unlock the cabinet, it takes a great amount of time.

In an attempt to reduce the above mentioned time-consuming operations, most often several outers more than needed are retrieved. This situation should be avoided, especially if incorrect products are retrieved to the sales area, which may subsequently not be returned to the cabinet. As a result it is difficult to keep track on the expiry date of the individual outers.

It is the aim of the invention is to provide a system, in which it is easy to collect an outer for cigarettes or other tobacco industry products and in which it is easy to control who is responsible for a specific outer at a certain time and at the same time it is easy for the responsible person to keep track of the expiry date of the individual outers.

It is known from US5805455 to provide a storage system for handling outers, which system comprises a number of compartments each having a bottom plate and being configured to accommodated one or more outers, and a registration unit for registration of incoming outers which registration unit registers and allocates a place in a compartment for the registered outer.

A storage system for handling outers according to the present invention, is characterised in that the bottom plate is manufactured from a transparent material capable of transmitting light from a light source or indicator placed at the rear of the compartment and through the bottom plate in such a way that light will be visible at the front edge of the bottom plate.

By having a number of compartments which are provided with an indicator showing if a specific compartment is allocated for receiving one or more outers it is easy to determine where the outer should be placed.

By having a number of compartments which are provided with an indicator showing if a specific compartment is selected for delivering or releasing one or more outers it is easy to determine from where the outer should be removed.

Thereby it is possible for the system to keep track of the outers handled by the system. This is done by calculating from the registered data which outer of a certain product is the oldest and should be used first.

Having a number of compartments provided with a detector for registration of presence or non presence of one or more outers in the compartment, makes it possible to control if one or more outers are present and if a compartment is occupied.

To facilitate in which compartment one or more outers should be placed the indicator comprises at least one light emitting device providing a first emitting colour to the indicator.

In an embodiment of the invention the first emitting colour provided to the indicator is green.

To facilitate from which compartment one or more outers should be removed the indicator comprises at least one light emitting device providing a second emitting colour to the indicator.

In an embodiment of the invention the second emitting colour provided to the indicator is red.

In another embodiment of a storage system for outers, the bottom plates are sloping in a downwards direction towards the rear of the cabinet in such a way that an outer placed in a compartment will be held in place by gravity forcing the outer towards the rear of the compartment.

To accommodate easy handling when the retail worker picks up an outer from a compartment, the front end of the bottom plate is provided with a recess. Thereby it is possible for the retail worker to get a firm grip on an outer with his fingers on the upper side and the lower side of the outher even though the outer is resting on the bottom plate.

Each compartment for storing outers is provided with one or more light sources at the rear. The light sources can have different colours. As an example green light can indicate that a compartment is ready for receiving an outer and red light can indicate that an illegal action has ocurred.

Such an illegal action could be removal of an outer without permission from the system.

The invention will now be described more fully below with reference to the drawings, in which:

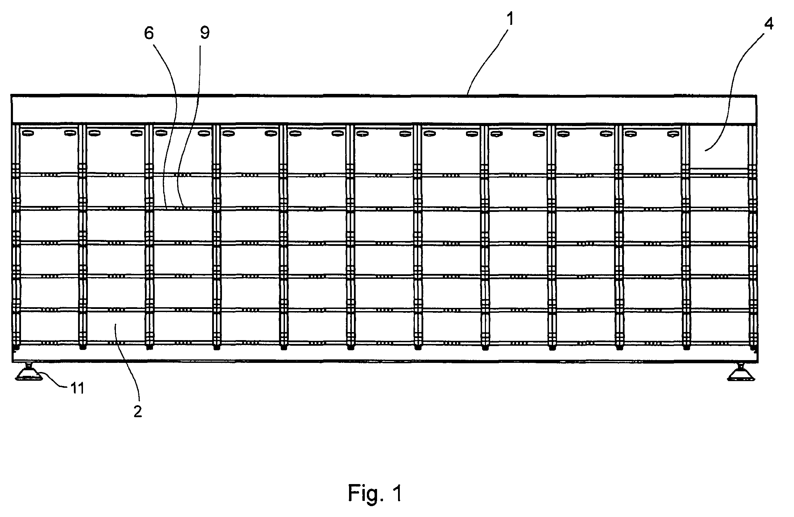

Figure 1 shows a front view of an empty storage system for outers;

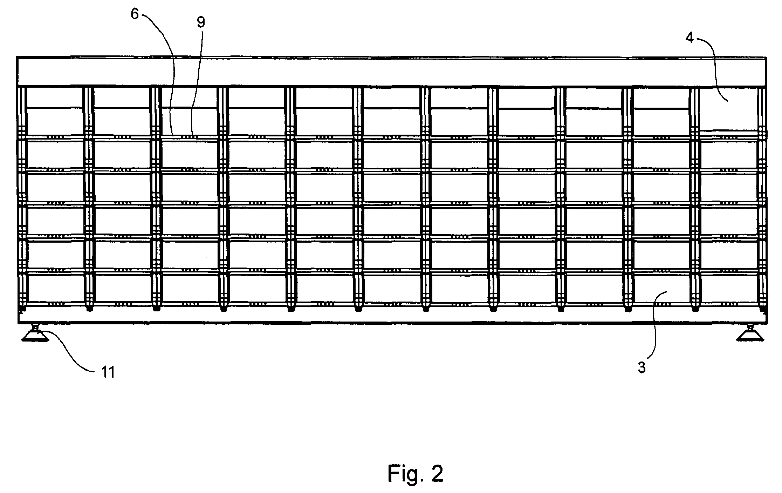

Figure 2 shows a front view of a filled storage system for outers;

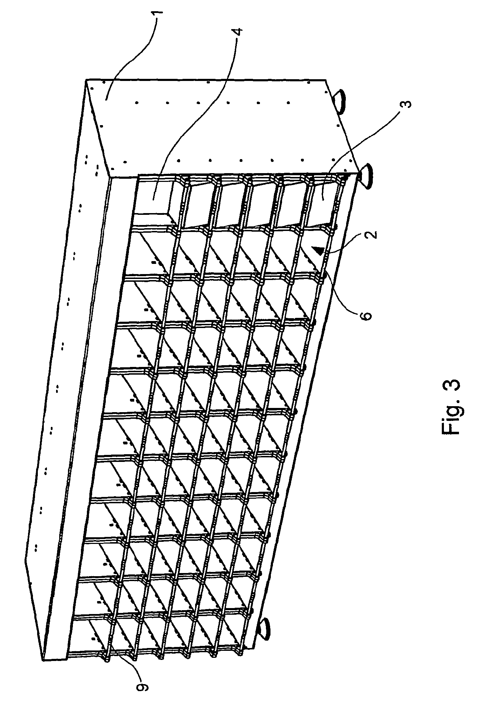

Figure 3 shows a perspective front view of storage system for outers, with outers in the right side of the storage system;

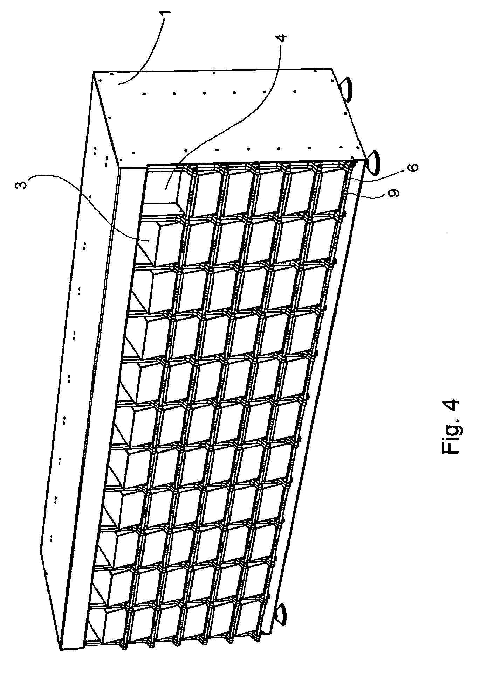

Figure 4 shows a perspective front view of a filled storage system for outers;

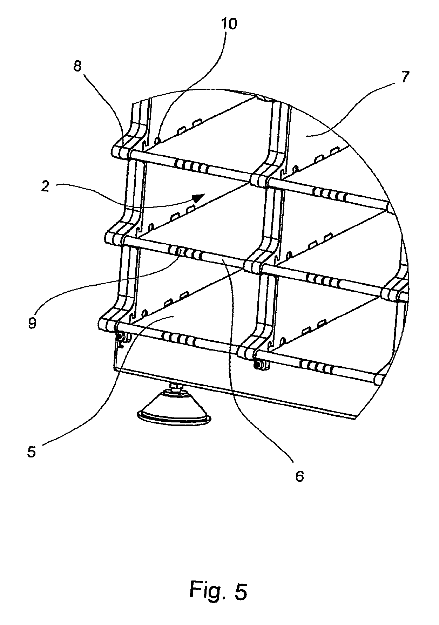

Figure 5 shows a section of an empty storage system for outers;

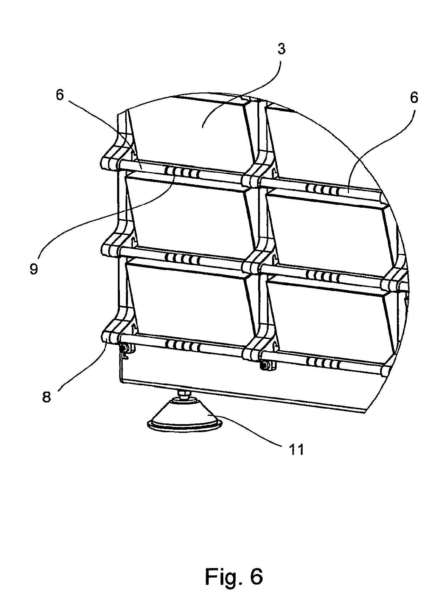

Figure 6 shows a section of a filled storage system for outers;

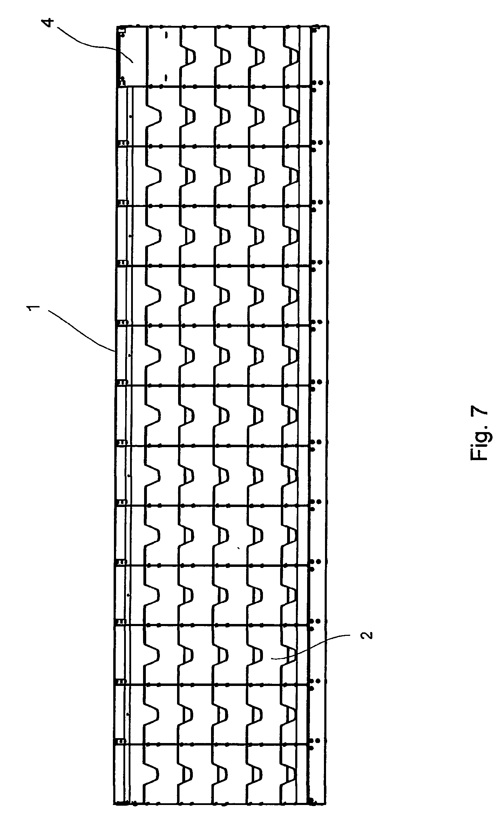

Figure 7 shows a front view of another embodiment of an empty storage system for outers;

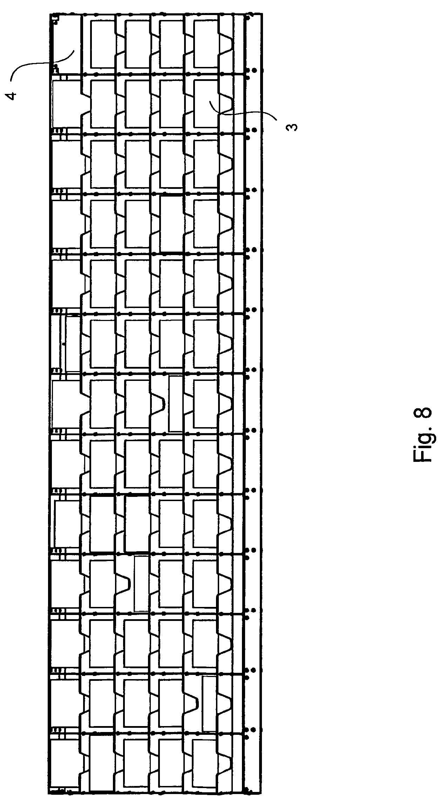

Figure 8 shows a front view of another embodient of a filled storage system for outers;

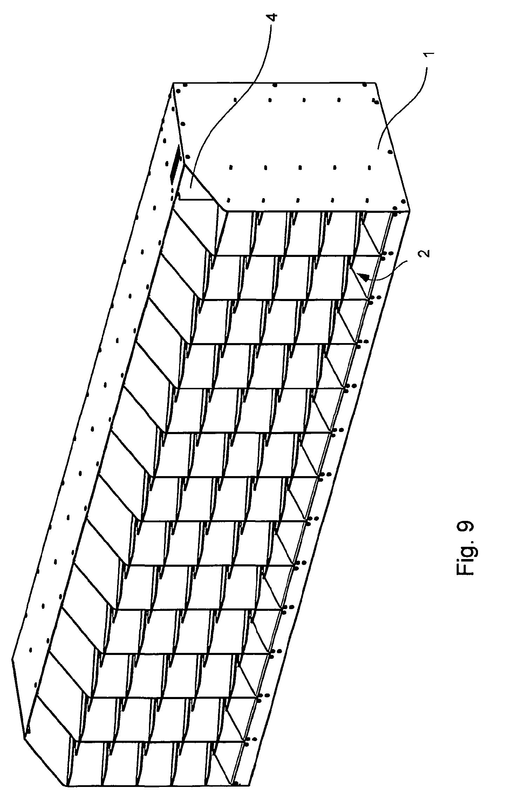

Figure 9 shows a perspective view of another embodiment of an empty storage system for outers;

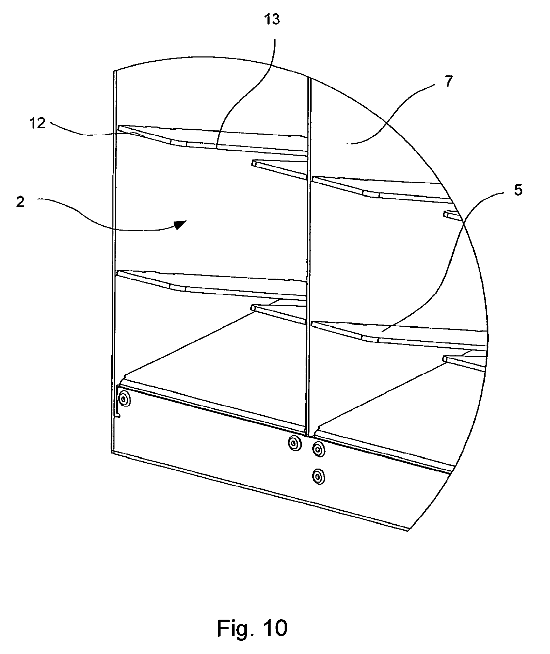

Figure 10 shows a section of an embodiment of an empty storage system for outers;

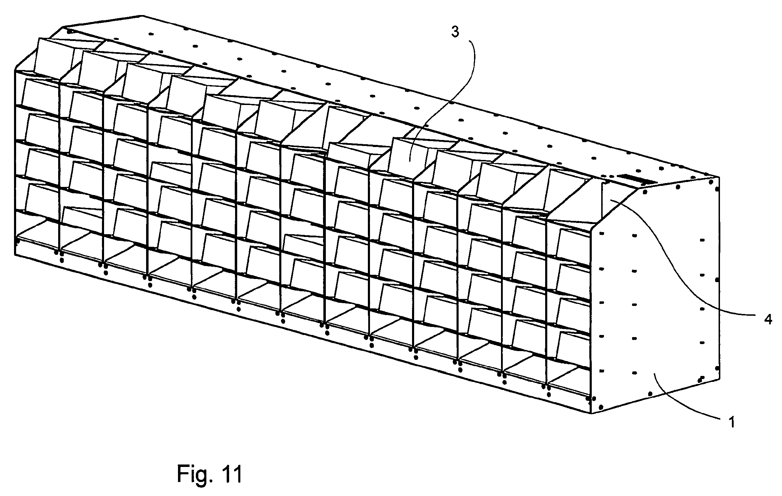

Figure 11 shows a perspective view of another embodiment of a filled storage system for outers, filled with outers of different sizes; and

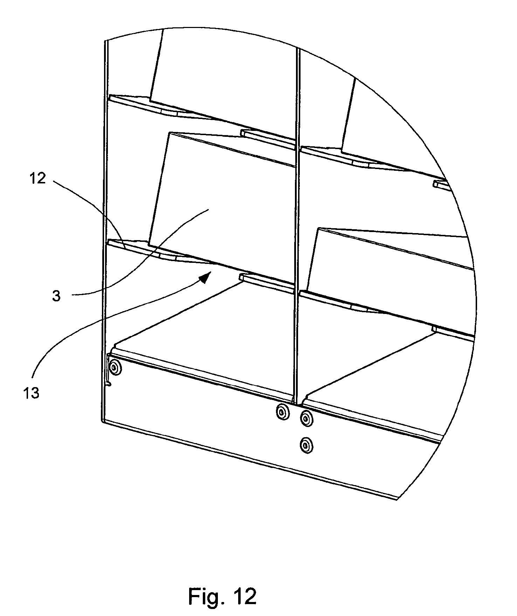

Figure 12 shows shows a section of an embodiment of a filled storage system for outers.

### DETAILED DESCRIPTION

The invention comprises a storage system for handling packages, which system comprises a cabinet 1 comprising a number of compartments 2, each configured to accommodate one or more packages, referred to herein as outers 3.

The storage system is provided with a registration unit 4 for registration of incoming outers 3 which registration unit 4 registers and allocates a place in a compartment 2 for the registered outer 3.

The registration unit 4 comprises a scanner for scanning bar codes and the registration unit can be placed in a specific compartment 4 of the cabinet 1, such as the upper right corner. The registration unit can also be placed separate from the cabinet in such a way that the connection between the registration unit and the cabinet is via a calculating unit (not shown), which calculating unit can keep track of the outers 3 in stock and allocates a place in a compartment 2 for the registered outer 3. The most important aspect in relation to where the registration unit 4 is placed is that the registration unit 4 is easy to access.

To make the handling of outers 3 easier for a retail worker, the outers 3 should be placed at a front end of the compartments 2. To be sure that the outers 3 will be at the end of the compartments 2 directed against the front side of the cabinet 1, where the retail worker will operate the storage system, each compartment 2 for storing one or more outers 3 is provided with an inclined bottom plate 5 inclining downwards in the direction of the front of the compartment 2. At the front end of the bottom plate 5 stop means 6 is provided to ensure that the one or more outers 3 do not slip over the front edge of the bottom plate 5 of a compartment 2. The stop means can be an upwardly directed bend of the bottom plate 5. Stop means can also be provided by one or more upwardly directed pins, which pin or pins protrude upwardly in relation to the bottom plate 5. In an advantageous embodiment stop means is a rod or bar 6 positioned across the lower part of an opening of the compartment 2 in such a way that an outer 3 cannot slip over the rod or bar 6. In the following description the rod or bar 6 for convenience is referred to as a bar 6.

The bar 6 can be attached to one or more sides 7 of the compartment 2 or attached to protrusions 8 protruding from the lower part at each side of the front opening of the compartment 2.

The bar 6 is provided with an indicator 9, showing if a specific compartment 2 is allocated for receiving one or more outers 3, which makes it is easy to determine where the outer 3 should be placed.

By having a number of compartments 2 which are provided with an indicator 9 showing if a specific compartment 2 is selected for delivering or releasing one or more outers 3 it is easy to determine from which compartment 2 the outer 3 should be removed.

Thereby it is possible for the system to keep track of the outers 3 handled by the system. This is done by calculating from the registered data which outer 3 of a certain brand or label is the oldest and should be used first.

The system can also be linked together with a storage, sales and delivery system for packages of cigarettes or other tobacco related products.

In such a situation the storage system is connectable with and in communication with the sales system.

Thereby it is possible for the sales system to send information to the registration unit 4 of the storage system for outers. If the sales system runs short of a specific product the calculating unit (not shown) can, for example, through the registration unit 4 activate one or more indicators 9 on the outer storage system to show from which compartment 2 an outer 3 should be picked out, be unwrapped and the individual packages from the outer 3 entered into the sales system. Together with the storage, sales and delivery system, the storage system for handling outers monitor stock levels of packages.

Having a number of compartments 2 provided with a detector 10 for registration of presence or non presence of one or more outers 3 in the compartment 2, makes it possible to control if one or more outers 3 are present and if a compartment 2 is occupied.

To facilitate in which compartment 2 one or more outers 3 should be placed the indicator 9 comprises at least one light emitting device providing a first emitting colour to the indicator 9.

In one embodiment the first emitting colour provided to the indicator 9 is green.

To facilitate from which compartment 2 one or more outers 3 should be removed the indicator 9 comprises at least one light emitting device providing a second emitting colour to the indicator 9.

In one embodiment the second emitting colour provided to the indicator 9 is red.

When the outer 3 is placed correctly in the allocated compartment 2, the indicator 9 relating to this compartment 2 will turn off or change colour.

The indicator 9 can indicate that compartments 2 are "blocked" from delivery. If one or more outers 3 are removed during such indication the retail worker or supervisor, may be held responsible for the one or more outers 3 being removed.

Identification of the retail worker for example can be effected electronically by a token or by entering a code in the storage system or other retail system.

In another embodiment of a storage system for outers, the bottom plates 5 sloping in a downwards direction towards the rear of the compartment 2 in such a way that an outer 3 placed in a compartment 2 will be held in place by gravity forcing the outer 3 towards the rear end of the compartment 2.

To accommodate easy handling when the retail worker picks up an outer 3 from a compartment 2, a front end 12 of the bottom plate 5 is provided with a recess 13. Thereby it is possible for the retail worker to get a firm grip on an outer 3 with his fingers on the upper side and the lower side of the outher 3 even though the outer is resting on the bottom plate 5.

The bottom plate 5 can be manufactured from a transparent plastic material or the like, which material is capable of transmitting light from a light source or indicator placed at the edge of the bottom plate. In an embodiment the light source or indicator is placed at the rear of the compartment 2 and through the bottom plate 5 in such a way that the light will be visible at the front edge 12 of the bottom plate 5.

Each compartment 2 for storing outers 3 can be provided with one or more light indicators at the rear. The indicators can have different colours. As an example green light can indicate that a compartment 2 is ready for receiving an outer 3 and red light can indicate that an illegal action has ocurred and from which compartment the illegal action has occured.

Such an illegal action could be removal of an outer 3 without permission from the system.

Further the detector for registration of presence or non presence of one or more outers 3 in the compartment 2 can be placed at the rear of the compartments, hereby is achieved that the detectors are less vulnerable and it is more difficult to bypass a detector, when it is placed as far away from the outside opening as possible.

Preferably the detector for registration of presence or non presence of one or more outers 3 in the compartment 2 can be located at the rear of each compartment. Further a printed circuit board is provided for each individual compartment, so that it there is a problem with one PCB it will not affect multiple compartments. Detectors and indicators can preferably be placed on or adjacet to the printed circuit board.

The cabinet 1 can be provided with adjustable supporting members 11, making it possible to place the cabinet level on a surface such as a floor, a deck or the like.

The invention also relates to a method of handling outers by a system, which system comprises a number of compartments for accommodating one or more outers, characterised in that an outer 3 is registered in a registering unit 4 for registration of incoming outers 3 which registration unit 4 via a calculating unit (not shown), registers and allocates a place in a compartment 2 for the registered outer 3.

## Claims

1. A storage system for handling outers, which system comprises a number of compartments each having a bottom plate (5) and being configured to accommodate one or more outers, and a registration unit (4) for registration of incoming outers (3) which registration unit (4) registers and allocates a place in a compartment (2) for the registered outer (3), **characterised in that** the bottom plate (5) is manufactured from a transparent material capable of transmitting light from a light source or indicator placed at the rear of the compartment (2) and through the bottom plate (5) in such a way that light will be visible at the front edge (12) of the bottom plate (5).

2. Storage system according to claim i , **characterised in that** a number of compartments (2) are provided with an indicator (9) to show if a specific compartment (2) is allocated for receiving one or more outers (3).

3. Storage system according to claim 1 or 2, **characterised in that** a number of compartments (2) are provided with an indicator (9) showing if a specific compartment (2) is selected for delivering or releasing one or more outers (3).

4. Storage system according to claim 1, 2 or 3, **characterised in that** a number of compartments (2) are provided with a detector (10) for registration of presence or non presence of one or more outers (3) in a compartment (2).

5. Storage system according to claim 2 or 3, **characterised in that** the indicator (9) comprises at least one light emitting device providing a first emitting colour to the indicator (9).

6. Storage system according to claim 5, **characterised in that** the indicator (9) comprises at least one light emitting device providing a second emitting colour to the indicator (9).

7. Storage system according to claim 5 or 6, **characterised in that** the first emitting colour provided to the indicator (9) is green.

8. Storage system according to claim 5 or 6, **characterised in that** the second emitting colour provided to the indicator (9) is red.

9. Storage system according to one or more of the preceding claims, **characterised in that** the storage system is connectable with and operable to be in communication with a sales system.

10. Storage system according to one or more of the preceding claims, **characterised in that** the compartments (2) are sloping in a downwards direction towards the front of the compartment (2).

11. Storage system according to one or more of the preceding claims 1 - 9, **characterised in that** the compartments (2) are sloping in a downwards direction towards the rear of the compartment (2).

12. Storage system according to one or more of the preceding claims, **characterised in that** the cabinet (1) is provided with adjustable supporting members (11).

## Patentansprüche

1. Lagersystem zum Handhaben von Außenverpackungen, wobei das System Folgendes beinhaltet: eine Anzahl von Zellen, die jeweils eine untere Platte (5) aufweisen und konfiguriert sind, um eine oder mehrere Außenverpackungen aufzunehmen, und eine Registrierungseinheit (4) zum Registrieren von eingehenden Außenverpackungen (3), wobei die Registrierungseinheit (4) in einer Zelle (2) einen Platz für die registrierte Außenverpackung (3) registriert und zuordnet, **dadurch gekennzeichnet, dass** die untere Platte (5) aus einem transparenten Material gefertigt ist, das in der Lage ist, Licht von einer Lichtquelle oder einem Indikator, die an der Rückseite der Zelle (2) platziert sind, und durch die untere Platte (5) derart durchzulassen, dass das Licht an der vorderen Kante (12) der unteren Platte (5) sichtbar wird.

2. Lagersystem gemäß Anspruch 1, **dadurch gekennzeichnet, dass** eine Anzahl von Zellen (2) mit einem Indikator (9) ausgestattet sind, um zu zeigen, ob eine spezifische Zelle (2) zum Aufnehmen von einer oder mehreren Außenverpackungen (3) zugeordnet ist.

3. Lagersystem gemäß Anspruch 1 oder 2, **dadurch gekennzeichnet, dass** eine Anzahl von Zellen (2) mit einem Indikator (9) ausgestattet sind, der zeigt, ob eine spezifische Zelle (2) zum Ausgeben oder Freigeben von einer oder mehreren Außenverpackungen (3) ausgewählt ist.

4. Lagersystem gemäß Anspruch 1, 2 oder 3, **dadurch gekennzeichnet, dass** eine Anzahl von Zellen (2) mit einem Detektor (10) zum Registrieren des Vorhandenseins oder Nichtvorhandenseins von einer oder mehreren Außenverpackungen (3) in einer Zelle (2) ausgestattet sind.

5. Lagersystem gemäß Anspruch 2 oder 3, **dadurch gekennzeichnet, dass** der Indikator (9) mindestens eine lichtemittierende Vorrichtung beinhaltet, die dem Indikator (9) eine erste emittierende Farbe bereitstellt.

6. Lagersystem gemäß Anspruch 5, **dadurch gekennzeichnet, dass** der Indikator (9) mindestens eine lichtemittierende Vorrichtung beinhaltet, die dem Indikator (9) eine zweite emittierende Farbe bereitstellt.

7. Lagersystem gemäß Anspruch 5 oder 6, **dadurch gekennzeichnet, dass** die erste emittierende Farbe, die dem Indikator (9) bereitgestellt wird, grün ist.

8. Lagersystem gemäß Anspruch 5 oder 6, **dadurch gekennzeichnet, dass** die zweite emittierende Farbe, die dem Indikator (9) bereitgestellt wird, rot ist.

9. Lagersystem gemäß einem oder mehreren der vorhergehenden Ansprüche, **dadurch gekennzeichnet, dass** das Lagersystem verbindbar und betriebsfähig ist, um in Kommunikation mit einem Verkaufssystem zu sein.

10. Lagersystem gemäß einem oder mehreren der vorhergehenden Ansprüche, **dadurch gekennzeichnet, dass** die Zellen (2) in einer Abwärtsrichtung zur Vorderseite der Zelle (2) hin geneigt sind.

11. Lagersystem gemäß einem oder mehreren der vorhergehenden Ansprüche 1-9, **dadurch gekennzeichnet, dass** die Zellen (2) in einer Abwärtsrichtung zur Rückseite der Zelle (2) hin geneigt sind.

12. Lagersystem gemäß einem oder mehreren der vorhergehenden Ansprüche, **dadurch gekennzeichnet, dass** der Schrank (1) mit verstellbaren Stützelementen (11) ausgestattet ist.

## Revendications

1. Système de stockage pour le maniement d'emballages extérieurs, lequel système comprend un certain nombre de compartiments dont chacun possède une plaque de fond (5) et est configuré pour recevoir un ou plusieurs emballages extérieurs, et une unité d'enregistrement (4) pour enregistrer les emballages extérieurs (3) entrants, laquelle unité d'enregistrement (4) effectue l'enregistrement et alloue à l'emballage extérieur (3) enregistré une place dans un compartiment (2), **caractérisé en ce que** la plaque de fond (5) est fabriquée à partir d'un matériau transparent capable de transmettre la lumière depuis une source lumineuse ou un indicateur placé à l'arrière du compartiment (2) et à travers la plaque de fond (5) de telle façon que la lumière soit visible au niveau du bord avant (12) de la plaque de fond (5).

2. Système de stockage selon la revendication 1, **caractérisé en ce qu'**un certain nombre de compartiments (2) sont munis d'un indicateur (9) pour montrer si un compartiment (2) spécifique est alloué pour recevoir un ou plusieurs emballages extérieurs (3).

3. Système de stockage selon la revendication 1 ou la revendication 2, **caractérisé en ce qu'**un certain nombre de compartiments (2) sont munis d'un indicateur (9) montrant si un compartiment (2) spécifique est sélectionné pour délivrer ou libérer un ou plusieurs emballages extérieurs (3).

4. Système de stockage selon la revendication 1, la revendication 2 ou la revendication 3, **caractérisé en ce qu'**un certain nombre de compartiments (2) sont munis d'un détecteur (10) pour enregistrer la présence ou la non-présence d'un ou plusieurs emballages extérieurs (3) dans un compartiment (2).

5. Système de stockage selon la revendication 2 ou la revendication 3, **caractérisé en ce que** l'indicateur (9) comprend au moins un dispositif émetteur de lumière qui fournit une première couleur d'émission à l'indicateur (9).

6. Système de stockage selon la revendication 5, **caractérisé en ce que** l'indicateur (9) comprend au moins un dispositif émetteur de lumière qui fournit une deuxième couleur d'émission à l'indicateur (9).

7. Système de stockage selon la revendication 5 ou la revendication 6, **caractérisé en ce que** la première couleur d'émission fournie à l'indicateur (9) est verte.

8. Système de stockage selon la revendication 5 ou la revendication 6, **caractérisé en ce que** la deuxième couleur d'émission fournie à l'indicateur (9) est rouge.

9. Système de stockage selon l'une ou plusieurs des revendications précédentes, **caractérisé en ce que** le système de stockage peut être relié à, et exploité de façon à communiquer avec, un système de vente.

10. Système de stockage selon l'une ou plusieurs des revendications précédentes, **caractérisé en ce que** les compartiments (2) présentent une pente inclinée vers le bas en direction de l'avant du compartiment (2).

11. Système de stockage selon l'une ou plusieurs des revendications 1 à 9 précédentes, **caractérisé en ce que** les compartiments (2) présentent une pente inclinée vers le bas en direction de l'arrière du compartiment (2).

12. Système de stockage selon l'une ou plusieurs des revendications précédentes, **caractérisé en ce que** le meuble (1) est muni d'éléments de support (11) réglables.
